# EUROPÄISCHE PATENTSCHRIFT

(11) **EP 1 710 137 B1**
(45) Veröffentlichungstag und Bekanntmachung des Hinweises auf die Patenterteilung: **23.04.2008**
(21) Anmeldenummer: 06006136.3
(22) Anmeldetag: 24.03.2006
(51) Int. Cl.: B60R 21/276

(54) **Fahrzeuginsassen-Rückhaltevorrichtung**
Vehicle occupant restraint device
Dispositif de retenue d'un occupant de véhicule

(30) Priorität: 07.04.2005 DE 202005005466 U
(43) Veröffentlichungstag der Anmeldung: 11.10.2006
(73) Patentinhaber: TRW Automotive Safety Systems GmbH, 63743 Aschaffenburg (DE)
(72) Erfinder: Britz, Thomas, Dr., 63856 Bessenbach (DE)
(74) Vertreter: Kitzhofer, Thomas

(56) Entgegenhaltungen:
- DE-A1- 10 124 273
- DE-A1- 19 630 855
- DE-A1- 19 810 537
- US-A1- 2004 012 180
- US-A1- 2004 021 307
- US-A1- 2004 056 459

## Beschreibung

Die Erfindung betrifft eine Fahrzeuginsassen-Rückhaltevorrichtung mit einem Gassackmodul, umfassend einen Gasgenerator zum Befüllen eines Gassacks, wenigstens eine in einem festen Bauteil des Gassackmoduls gebildete Abströmöffnung, durch die das vom Gasgenerator erzeugte und in den Gassack geleitete Gas abströmen kann, und wenigstens eine Verschlußeinrichtung für die Abströmöffnung.

Für gewöhnlich soll bei einer solchen Fahrzeuginsassen-Rückhaltevorrichtung ein Gassack mit dem von einem Gasgenerator erzeugten Gas möglichst schnell befüllt werden. In bestimmten Fällen ist es allerdings wünschenswert, den Gassack nicht mit dem gesamten verfügbaren Gasvolumen zu befüllen oder, allgemeiner, Gas ausströmen zu lassen, weshalb im Gassackmodul Abströmöffnungen vorgesehen sind, durch deren Freigabe der Druck im Gassack begrenzt werden kann.

In der Literatur sind zahlreiche Lösungsmöglichkeiten beschrieben, die es sich zum Ziel gesetzt haben, bei einem Unfall den Innendruck und damit die Rückhaltewirkung des Gassacks lastfallabhängig zu regulieren, wobei als Steuerparameter u.a. die Masse der zu schützenden Person oder die gefahrene Geschwindigkeit in Frage kommt. Darunter werden auch Apparaturen mit Dreh- bzw. Schieberventilen vorgeschlagen, welche den Gasstrom regeln. Ein anderer, in der DE 198 10 537 A1 vorgeschlagener Lösungsansatz besteht darin, den Gasstrom vom Gasgenerator in den Gassack lastfallabhängig zu begrenzen, indem man über eine Stelleinrichtung ein Ventil noch während der Fahrt vor einem möglichen Unfall betätigt.

Eine weitere Lösung sieht vor, den erreichbaren Innendruck dadurch zu begrenzen, daß man im Gassack, evtl. zusätzlich zu einer bereits vorhandenen, eine (weitere) Abströmöffnung anbringt und diese mit einer Membran verschließt. Die Membran wird dann bei einem bestimmten Druck bersten, und Gas kann aus dem Gassack ausströmen (siehe z.B. DE 296 17 586).

Aus der gattungsbildenden US 2004/0021307 A1 ist ein Gassackmodul mit mehreren durch Membranen verschlossenen Abströmöffnungen bekannt. In Abhängigkeit von der Unfallschwere sowie insassenspezifischen Parametern werden eine oder mehrere der Abströmöffnungen freigegeben, indem eine zugeordnete Sprengkapsel die jeweilige Membran auf ein Signal hin aktiv zerstört.

Ein Nachteil bei den aus dem Stand der Technik bekannten Ventillösungen besteht darin, daß diese in der Regel nur mit einem erheblichen Herstellungsaufwand zu realisieren sind. Möchte man das Ausströmen der Gase aus dem Gassack regulieren, besteht zudem das Problem der sehr kurzen Ansprechzeiten, die von der Regelung gefordert werden, da der gesamte Vorgang des Aufblasens des Gassacks sowie des Eintauchens und Zurückschleuderns des Insassen weniger als 150 ms in Anspruch nimmt. Versucht man hingegen, die Menge des in den Gassack einströmenden Gases dadurch zu steuern oder zu regeln, daß man den Gasstrom durch ein Ventil begrenzt, verlängert man auch die Aufblaszeit, so daß der zu schützenden Person womöglich erst zu einem späteren Zeitpunkt die volle Rückhaltewirkung zur Verfügung steht. Die Lösungen, die mit einer berstenden Membran arbeiten, weisen zwar nicht das Problem der Ansprechzeiten auf, stellen aber keine Regelungen im eigentlichen Sinne dar, da sie lediglich auf einen Schwellenwert, nämlich das Erreichen eines bestimmten Innendrucks, reagieren.

Demgegenüber schafft die Erfindung ein System, das zum einen mit extrem kurzen Ansprechzeiten auf den während des Aufblasens ansteigenden Innendruck im Gassack reagiert und zum anderen eine stufenweise Einstellung des maximal zulässigen Innendrucks in Abhängigkeit vom vorliegenden Lastfall erlaubt.

Dies wird erfindungsgemäß bei einer Fahrzeuginsassen-Rückhalte-Vorrichtung des eingangs genannten Art mit einem Gassackmodul dadurch erreicht, daß die verschlußeinrichtung, eine Stelleinrichtung und mehrere unterschiedlich druckempfindliche Abdeckungen aufweist, wobei mittels der Stelleinrichtung bereits vor einer Auslösung des Gassackmoduls eine bestimmte Abdeckung vor die Abströmöffnung gebracht wird, um diese bis zu einem vorbestimmten, von der jeweiligen Abdeckung abhängigen Gassackinnendruck zu verschließen und sie bei Überschreitung dieses Innendrucks durch Aufreißen wenigstens teilweise freizugeben. Bei der erfindungsgemäßen Fahrzeuginsassen-Rückhaltevorrichtung werden also Abdeckungen unterschiedlicher Druckempfindlichkeit vor einer Abströmöffnung in einem Gehäuse des Gassackmoduls, einem Generatorträger oder einem anderen festen, im Sinne von weitgehend starren Bauteil wahlweise dazu genutzt, den maximal möglichen Innendruck und damit die Härte des Gassacks an den vorliegenden Lastfall individuell anzupassen und dadurch den Insassen vor unnötigen Verletzungen zu bewahren. Einerseits muß der Innendruck ausreichend sein, um ein Auftreffen des Körpers auf das Lenkrad zu verhindern, andererseits würde ein zu harter Gassack den Körper der zu schützenden Person stärker deformieren als notwendig. Da das erfindungsgemäße System nicht den Gasstrom vom Gasgenerator in den Gassack begrenzt, ist ein rasches Aufblasen des Gassacks möglich, so daß dem Insassen frühzeitig die volle Rückhaltewirkung zur Verfügung steht. Des weiteren erlaubt es, auf unterschiedliche Lastfälle zu reagieren, indem die Größe der Rückhaltewirkung durch Variation des maximalen Innendrucks angepaßt werden kann.

Um eine optimale Rückhaltewirkung zu erzielen, ist vorzugsweise wenigstens ein Sensor vorgesehen, der fahrzeug- oder insassenspezifische Parameter erfaßt, sowie eine Steuereinheit, die die Parameter verarbeitet und die Stelleinrichtung ansteuert. Bei den insassenspezifischen Parametern handelt es sich beispielsweise um das Gewicht oder die Größe des Fahrzeuginsassen, seine Sitzposition oder ob der Fahrzeuginsasse angeschnallt ist oder nicht. Als fahrzeugspezifische Größe wird z. B. die momentane Fahrgeschwindigkeit erfaßt. So kann bereits während des Fahrbetriebs vor dem Eintreten eines Unfalls diejenige Abdeckung vor der Abströmöffnung plaziert werden, die dem Insassen ausreichenden Schutz bei geringstem Verletzungsrisiko bietet.

Gemäß einer bevorzugten Ausführungsform sind die Abdeckungen unterschiedlich dick ausgeführt, wodurch auf einfache Weise die gewünschte unterschiedliche Druckempfindlichkeit realisiert werden kann.

Vorteilhaft ist der vorbestimmte Aufreißquerschnitt der Abdeckungen gleich. Dieser entspricht dann nahezu der Größe der in dem festen Bauteil vorgesehenen Abströmöffnung, die somit bei Bedarf großflächig freigegeben wird.

Die Verschlußeinrichtung weist vorzugsweise eine Platte mit mehreren Öffnungen auf, die vor Erreichen des jeweiligen Gassackinnendrucks durch eine zugeordnete Abdeckung verschlossen sind. Damit ergibt sich eine besonders stabile Anordnung. Alternativ kann natürlich auch eine einstückig ausgeführte Platte oder auf einen Rahmen gespannte Membran vorgesehen sein, die aus mehreren Segmenten unterschiedlicher Dicke besteht. Dabei bilden die Segmente selbst die Abdeckungen.

Die jeweilige Abdeckung kann durch Bewegen der Platte vor die Abströmöffnung gebracht werden. Natürlich wäre es ebenso denkbar, die Abströmöffnung zu bewegen und die Abdeckung unbewegt zu halten, da es lediglich auf die Relativbewegung zwischen der Abdeckung und der Abströmöffnung ankommt.

Gemäß einer ersten Ausführungsform weist die Platte z.B. annähernd Kreisform auf und wird durch die Stelleinrichtung rotatorisch bewegt. Die Platte ist dann über eine Drehachse mit dem festen Bauteil des Gassackmoduls verbunden, die so positioniert ist, daß die einzelnen Öffnungen der Platte, die auf einem Teilkreis angeordnet sind, durch Drehen der ganzen Platte über die Abströmöffnung im festen Bauteil gebracht werden.

Gemäß einer weiteren Ausführungsform weist die Platte z.B. eine längliche Rechteckform auf und wird durch die Stelleinrichtung translatorisch bewegt. Die Befestigung der Platte am festen Bauteil des Gassackmoduls erfolgt dann beispielsweise über Führungsschienen, so daß sich die Öffnungen in der Platte durch laterales Verschieben über die Abströmöffnung bringen lassen. Diese Ausführungsform zeichnet sich durch eine besonders kompakte Bauweise aus.

Bei der Stelleinrichtung handelt es sich bevorzugt um eine Mechanik, die sich durch einen einfachen Aufbau, niedrige Herstellungskosten und geringe Störungsanfälligkeit auszeichnet.

Um zu gewährleisten, daß nach dem Aufreißen der Abdeckung Gas aus dem Innenraum des Gassackmoduls nur durch diejenige Öffnung der Platte, die sich im Segment über der Abströmöffnung im festen Bauteil befindet, in den Außenraum entweichen kann, weist die Verschlußeinrichtung vorzugsweise wenigstens eine Dichtung auf. Diese kann an der Platte selbst oder am festen Bauteil des Gassackmoduls vorgesehen sein.

Vorteilhaft ist jede Abdeckung aus einem eigenen Materialstück. So ist sichergestellt, daß sich beim Aufreißen einer Abdeckung der Riß nicht auf die benachbart angeordneten Abdeckungen ausdehnt, die eigentlich erst bei einem höheren Gassackinnendruck reißen sollen.

Die Abdeckungen sind vorzugsweise aus demselben Material. Als Abdeckungen kommen insbesondere Membranen unterschiedlicher Dicke, beispielsweise Metall- oder Kunststoffolien in Betracht.

Weitere Merkmale und Vorteile der Erfindung ergeben sich aus der nachfolgenden Beschreibung mehrerer bevorzugter Ausführungsformen anhand der beigefügten Zeichnung. In dieser zeigt:
- Figur 1 eine schematische Ansicht einer Fahrzeuginsassen-Rückhaltevorrichtung gemäß einer ersten Ausführungsform der Erfindung, teilweise im Schnitt;
- Figur 2 eine Seitenansicht der Fahrzeuginsassen-Rückhaltevorrichtung aus Figur 1; und
- Figur 3 eine Seitenansicht einer Fahrzeuginsassen-Rückhaltevorrichtung gemäß einer zweiten Ausführungsform der Erfindung.

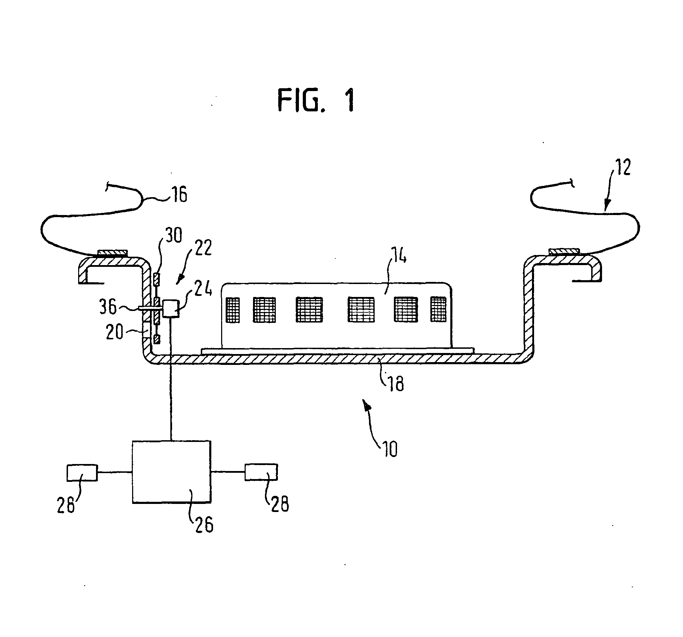

Figur 1 zeigt eine Fahrzeuginsassen-Rückhaltevorrichtung 10 mit einem Gassackmodul 12, das insbesondere für einen Einsatz als Fahrergassackmodul vorgesehen, jedoch nicht darauf beschränkt ist. Das Gassackmodul 12 weist einen Gasgenerator 14 und einen in der Figur nur angedeuteten Gassack 16 auf. In einem festen Bauteil des Gassackmoduls 12 in Form eines Generatorträgers 18 aus Blech ist eine Abströmöffnung 20 vorgesehen, die mittels einer Verschlußeinrichtung 22 verschlossen ist. Anstatt, wie in Figur 1 dargestellt, in einer Seitenwand kann die Abströmöffnung 20 natürlich auch im Boden des Generatorträgers 18 angeordnet sein. Der Gassack 16 ist in jedem Falle so am Generatorträger 18 befestigt, daß ein ungehinderter Gasstrom zwischen dem Gassackinneren und der Verschlußeinrichtung 22 sichergestellt ist.

Die Verschlußeinrichtung 22 umfaßt eine Stelleinrichtung in Form einer elektromotorisch betriebenen Mechanik 24, die durch eine Steuereinheit 26 betätigt wird, welche wiederum mit mehreren Sensoren, von denen nur zwei Sensoren 28 gezeigt sind, in Verbindung steht. Bei den Sensoren 28 handelt es sich beispielsweise um einen in einen Fahrzeugsitz integrierten Massesensor sowie einen Geschwindigkeitssensor, der die momentan gefahrene Geschwindigkeit erfaßt.

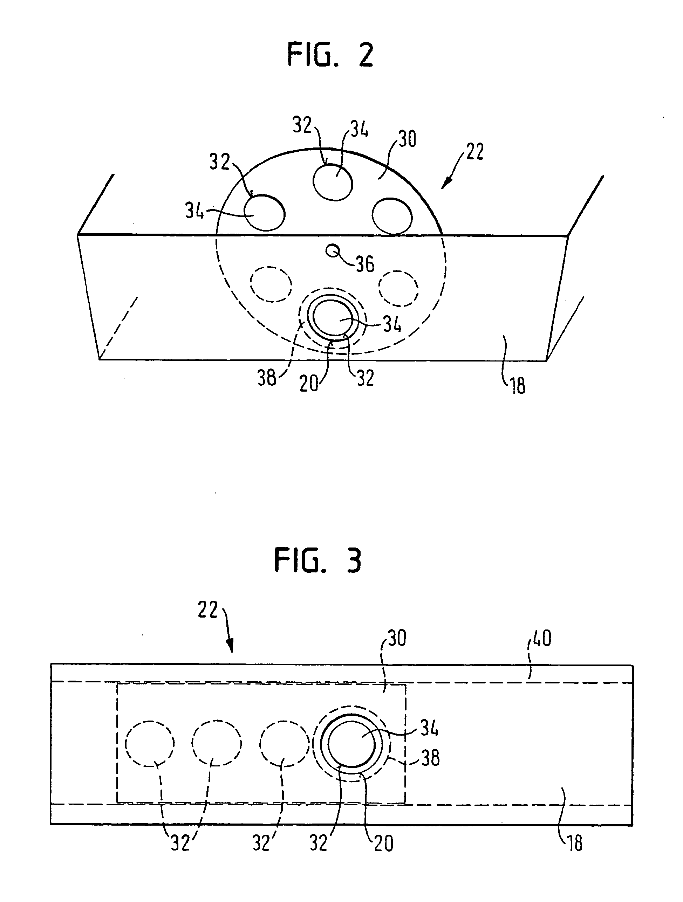

Weiterhin umfaßt die Verschlußeinrichtung 22 eine Platte 30 (Figur 2), die bei der gezeigten ersten Ausführungsform kreisförmig ausgebildet ist und mehrere Öffnungen 32 aufweist, von denen jede im nicht-ausgelösten Zustand des Gassackmoduls 12 durch eine Abdeckung verschlossen, genauer: mit einer die Abdeckung bildenden Membran 34 bespannt ist. Die Membranen 34 bestehen alle aus demselben Material, beispielsweise einer geeigneten Metall- oder Kunststoffolie, und weisen denselben Aufreißquerschnitt, also Durchmesser auf. Da die Membranen 34 jedoch unterschiedlich dick ausgeführt sind, ergibt sich für jede Membran 34 eine unterschiedliche Druckempfindlichkeit. Bei der gezeigten Ausführungsform besteht jede Membran 34 aus einem eigenen Materialstück. Ebenso wäre es aber auch denkbar, eine Platte vorzusehen, die in Segmente unterschiedlicher Materialdicke unterteilt und ansonsten einstückig ausgeführt ist.

Beaufschlagt man die Membranen 34 mit einem im Zeitverlauf ansteigenden Druck, so werden sie aufgrund ihrer unterschiedlichen Dicken bei verschiedenen Drücken bersten.

Die Platte 30 ist über eine Drehachse 36 mit dem Generatorträger 18 verbunden und kann durch die Mechanik 24 in eine Drehbewegung um diese Drehachse 36 versetzt werden. Auf diese Weise läßt sich jeweils genau eine Membran 34 zwischen die Abströmöffnung 20 und den Innenraum des Gassackmoduls 12 bringen, wobei die Membran 34 die Abströmöffnung 20 zunächst verschließt. Dabei ist die Abströmöffnung 20 im Generatorträger 18 etwas größer als die Öffnungen 32 in der Platte 30.

Zwischen der drehbaren Platte 30 und der Wand des Generatorträgers 18 ist im Bereich der Abströmöffnung 20 wenigstens eine Dichtung 38 angeordnet, die dafür sorgt, daß nach dem Zerreißen der Membran 34 Gas aus dem Innenraum des Gassackmoduls 12 nur durch diejenige Öffnung 32 der Platte 30 entweichen kann, die sich über der Abströmöffnung 20 im Generatorträger 18 befindet. Die Dichtung 38 ist entweder am Generatorträger 18 um die Abströmöffnung 20 herum angebracht, oder an der Platte 30 ist um jede der Öffnungen 32 herum eine solche Dichtung 38 vorgesehen.

Während des Betriebs des Fahrzeugs werden von den Sensoren 28 ein oder mehrere fahrzeug- bzw. insassenspezifische Parameter wie die Größe des Fahrzeuginsassen, seine Sitzposition, sein Gewicht, ob der Fahrzeuginsasse angeschnallt ist oder nicht, sowie die Fahrgeschwindigkeit ständig ermittelt. Die Steuereinheit 26 errechnet aufgrund der ermittelten Daten die in einem Rückhaltefall optimale Rückhaltewirkung sowie den mindestens erforderlichen Gassackinnendruck, der zu der gewünschten Rückhaltewirkung führt. Während des Fahrbetriebs, also noch vor einem möglichen Aufprall, wird dann diejenige Membran 34 vor der Abströmöffnung 20 des Generatorträgers 18 plaziert, die dem Insassen ausreichenden Schutz bei geringstem Verletzungsrisiko bietet. Dies geschieht, indem die kreisförmige Platte 30 durch die Mechanik 24 entsprechend verdreht wird.

Im Rückhaltefall strömt vom Gasgenerator 14 erzeugtes Gas in den Gassack 16. Der Druck im Inneren des Gassacks 16 wie auch im Innenraum des Gassackmoduls 12 steigt immer weiter an, bis schließlich ein Druck erreicht wird, der ausreichend ist, um die sich vor der Abströmöffnung 20 befindende Membran 34 zu zerstören und dadurch die Abströmöffnung 20 freizugeben. Auf diese Weise wird ein weicherer Gassack erzielt, der den Körper der zu schützenden Person nicht stärker deformiert, als es notwendig ist. Durch das Vorsehen mehrerer Membranen von unterschiedlicher Dicke, die daher bei verschiedenen Drücken bersten, können der maximal mögliche Innendruck und damit die Härte des Gassacks 16 an den aktuell vorliegenden Lastfall angepaßt werden und dadurch den Fahrzeuginsassen vor unnötigen Verletzungen bewahren.

Figur 3 zeigt eine alternative Ausführungsform der Verschlußeinrichtung 22, wobei gleiche Bauteile gleiche Bezugszeichen tragen und im folgenden nur auf die Unterschiede zur ersten Ausführungsform eingegangen wird. Bei der Verschlußeinrichtung 22 gemäß Figur 3 ist die Platte 30 in länglicher rechteckiger Form realisiert und mittels Führungsschienen 40 so am Generatorträger 18 befestigt, daß durch seitliches Verschieben der Platte 30 die einzelnen, mit Membranen 34 bespannten Öffnungen 32 über die größere Abströmöffnung 20 in der Seitenwand des Generatorträgers 18 gebracht werden können. So läßt sich bei besonders kompakter Bauweise die Härte des Gassacks 16 lastfallabhängig regeln.

## Patentansprüche

1. Fahrzeuginsassen-Rückhaltevorrichtung mit einem Gassackmodul (12), umfassend
einen Gasgenerator (14) zum Befüllen eines Gassacks (16),
wenigstens eine in einem festen Bauteil des Gassackmoduls (12) gebildete Abströmöffnung (20), durch die das vom Gasgenerator (14) erzeugte und in den Gassack (16) geleitete Gas abströmen kann, und
wenigstens eine Verschlußeinrichtung (22) für die Abströmöffnung (20),
**dadurch gekennzeichnet, daß** die Verschlußeinrichtung (22) eine Stelleinrichtung und mehrere unterschiedlich druckempfindliche Abdeckungen aufweist,
wobei mittels der Stelleinrichtung bereits vor einer Auslösung des Gassackmoduls (12) eine bestimmte Abdeckung vor die Abströmöffnung (20) gebracht wird, um diese bis zu einem vorbestimmten, von der jeweiligen Abdeckung abhängigen Gassackinnendruck zu verschließen und sie bei Überschreitung dieses Innendrucks durch Aufreißen wenigstens teilweise freizugeben.

2. Fahrzeuginsassen-Rückhaltevorrichtung nach Anspruch 1, **dadurch gekennzeichnet, daß** wenigstens ein Sensor (28) vorgesehen ist, der fahrzeug-oder insassenspezifische Parameter erfaßt, sowie eine Steuereinheit (26), die die Parameter verarbeitet und die Stelleinrichtung ansteuert.

3. Fahrzeuginsassen-Rückhaltevorrichtung nach Anspruch 1 oder Anspruch 2, **dadurch gekennzeichnet, daß** die Abdeckungen unterschiedlich dick ausgeführt sind.

4. Fahrzeuginsassen-Rückhaltevorrichtung nach einem der vorhergehenden Ansprüche, **dadurch gekennzeichnet, daß** der vorbestimmte Aufreißquerschnitt der Abdeckungen gleich ist.

5. Fahrzeuginsassen-Rückhaltevorrichtung nach einem der vorhergehenden Ansprüche, **dadurch gekennzeichnet, daß** die Verschlußeinrichtung (22) eine Platte (30) mit mehreren Öffnungen (32) aufweist, die vor Erreichen des jeweiligen Gassackinnendrucks durch eine zugeordnete Abdeckung verschlossen sind.

6. Fahrzeuginsassen-Rückhaltevorrichtung nach Anspruch 5, **dadurch gekennzeichnet, daß** die jeweilige Abdeckung durch Bewegen der Platte (30) vor die Abströmöffnung (20) gebracht wird.

7. Fahrzeuginsassen-Rückhaltevorrichtung nach Anspruch 5 oder Anspruch 6, **dadurch gekennzeichnet, daß** die Platte (30) durch die Stelleinrichtung rotatorisch bewegt wird.

8. Fahrzeuginsassen-Rückhaltevorrichtung nach Anspruch 5 oder Anspruch 6, **dadurch gekennzeichnet, daß** die Platte (30) durch die Stelleinrichtung translatorisch bewegt wird.

9. Fahrzeuginsassen-Rückhaltevorrichtung nach einem der vorhergehenden Ansprüche, **dadurch gekennzeichnet, daß** es sich bei der Stelleinrichtung um eine Mechanik (24) handelt.

10. Fahrzeuginsassen-Rückhaltevorrichtung nach einem der vorhergehenden Ansprüche, **dadurch gekennzeichnet, daß** die Verschlußeinrichtung (22) wenigstens eine Dichtung (38) aufweist.

11. Fahrzeuginsassen-Rückhaltevorrichtung nach einem der vorhergehenden Ansprüche, **dadurch gekennzeichnet, daß** jede Abdeckung aus einem eigenen Materialstück ist.

12. Fahrzeuginsassen-Rückhaltevorrichtung nach einem der vorhergehenden Ansprüche, **dadurch gekennzeichnet, daß** die Abdeckungen aus demselben Material sind.

## Claims

1. A vehicle occupant restraint device having a gas bag module (12), comprising
a gas generator (14) for filling a gas bag (16),
at least one outflow opening (20) that is formed in a fixed component of the gas bag module (12) and through which the gas that is produced by the gas generator (14) and conveyed into the gas bag (16) can escape, and
at least one closing device (22) for the outflow opening (20),
**characterized in that** the closing device (22) has an adjusting device and a plurality of covers of different pressure sensitivities,
a specific cover being placed in front of the outflow opening (20) by the adjusting device even before an activation of the gas bag module (12), so as to close the outflow opening (20) up to a predetermined gas bag interior pressure that is associated with the respective cover, and, when this interior pressure is exceeded, to at least partially release the outflow opening by bursting.

2. The vehicle occupant restraint device as recited in claim 1, **characterized in that** at least one sensor (28) is provided which detects vehicle- or occupant-specific parameters, and a control unit (26) that processes the parameters and drives the adjusting device.

3. The vehicle occupant restraint device as recited in claim 1 or claim 2, **characterized in that** the covers are produced so as to have different thicknesses.

4. The vehicle occupant restraint device as recited in any of the preceding claims, **characterized in that** the covers have the same predetermined bursting cross-sections.

5. The vehicle occupant restraint device as recited in any of the preceding claims, **characterized in that** the closing device (22) has a plate (30) that has a plurality of openings (32) which are closed by an associated cover before the respective gas bag interior pressure is reached.

6. The vehicle occupant restraint device as recited in claim 5, **characterized in that** the respective cover is placed in front of the outflow opening (20) by moving the plate (30).

7. The vehicle occupant restraint device as recited in claim 5 or claim 6, **characterized in that** the plate (30) is moved by the adjusting device in rotational fashion.

8. The vehicle occupant restraint device as recited in claim 5 or claim 6, **characterized in that** the plate (30) is moved by the adjusting device in translational fashion.

9. The vehicle occupant restraint device as recited in any of the preceding claims, **characterized in that** the adjusting device is a mechanism (24).

10. The vehicle occupant restraint device as recited in any of the preceding claims, **characterized in that** the closing device (22) has at least one seal (38).

11. The vehicle occupant restraint device as recited in any of the preceding claims, **characterized in that** each cover is made of a separate material piece.

12. The vehicle occupant restraint device as recited in any of the preceding claims, **characterized in that** the covers are made of the same material.

## Revendications

1. Dispositif de retenue de passager de véhicule, comportant un module de coussin à gaz (12) comprenant :
un générateur de gaz (14) pour remplir un coussin à gaz (16),
au moins un orifice d'échappement (20) formé dans un composant fixe du module de coussin à gaz (12), à travers lequel peut s'écouler le gaz engendré par le générateur de gaz (14) et conduit dans le coussin à gaz (16), et
au moins un dispositif de fermeture (22) pour l'orifice d'échappement (20),
**caractérisé en ce que** le dispositif de fermeture (22) présente un dispositif de réglage et plusieurs couvercles à différente sensibilité à la pression,
un couvercle déterminé étant déjà placé par le dispositif de réglage devant l'orifice d'échappement (20) avant un déclenchement du module de coussin à gaz (12) pour fermer cet orifice d'échappement (20) jusqu'à une pression intérieure de coussin à gaz prédéterminée dépendant du couvercle respectif, et pour le dégager au moins partiellement par éclatement lorsque cette pression intérieure est dépassée.

2. Dispositif de retenue de passager de véhicule selon la revendication 1, **caractérisé en ce qu'**il est prévu au moins un capteur (28) qui détecte des paramètres spécifiques au véhicule ou au passager, ainsi qu'une unité de commande (26) qui traite les paramètres et pilote le dispositif de réglage.

3. Dispositif de retenue de passager de véhicule selon la revendication 1 ou la revendication 2, **caractérisé en ce que** les couvercles sont réalisés avec différentes épaisseurs.

4. Dispositif de retenue de passager de véhicule selon l'une des revendications précédentes, **caractérisé en ce que** les couvercles ont la même section transversale d'éclatement.

5. Dispositif de retenue de passager de véhicule selon l'une des revendications précédentes, **caractérisé en ce que** le dispositif de fermeture (22) présente une plaque (30) avec plusieurs orifices (32) qui sont fermés par un couvercle associé avant d'atteindre la pression intérieure de coussin à gaz respective.

6. Dispositif de retenue de passager de véhicule selon la revendication 5, **caractérisé en ce que** le couvercle respectif est amené devant l'orifice d'échappement (20) par déplacement de la plaque (30).

7. Dispositif de retenue de passager de véhicule selon la revendication 5, ou la revendication 6, **caractérisé en ce que** la plaque (30) est déplacée en rotation par le dispositif de réglage.

8. Dispositif de retenue de passager de véhicule selon la revendication 5 ou la revendication 6, **caractérisé en ce que** la plaque (30) est déplacée en translation par le dispositif de réglage.

9. Dispositif de retenue de passager de véhicule selon l'une des revendications précédentes, **caractérisé en ce que** le dispositif de réglage est un mécanisme (24).

10. Dispositif de retenue de passager de véhicule selon l'une des revendications précédentes, **caractérisé en ce que** le dispositif de fermeture (22) présente au moins un joint (38).

11. Dispositif de retenue de passager de véhicule selon l'une des revendications précédentes, **caractérisé en ce que** chaque couvercle est constitué par une pièce de matériau propre.

12. Dispositif de retenue de passager de véhicule selon l'une des revendications précédentes, **caractérisé en ce que** les couvercles sont constitués par le même matériau.
